(19) Europäisches Patentamt European Patent Office Office européen des brevets

(11) **EP 4 316 825 A1**

(12) **EUROPEAN PATENT APPLICATION**
published in accordance with Art. 153(4) EPC

(43) Date of publication:
**07.02.2024 Bulletin 2024/06**

(21) Application number: **22775358.9**

(22) Date of filing: **16.03.2022**

(51) International Patent Classification (IPC):
**B32B 27/30** (2006.01)    **B32B 27/32** (2006.01)
**C09J 123/26** (2006.01)    **C09J 167/02** (2006.01)
**B32B 7/12** (2006.01)

(52) Cooperative Patent Classification (CPC):
**B32B 7/12; B32B 27/30; B32B 27/32;
C09J 123/26; C09J 167/02**

(86) International application number:
**PCT/JP2022/012056**

(87) International publication number:
**WO 2022/202570 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2021 JP 2021052399**

(71) Applicant: **TOYOBO MC Corporation
Osaka 530-0001 (JP)**

(72) Inventors:
• **YAMASHITA Yoji
Takasago-shi, Hyogo 676-0082 (JP)**
• **KASHIHARA Kenji
Takasago-shi, Hyogo 676-0082 (JP)**
• **FUJIMOTO Motoki
Takasago-shi, Hyogo 676-0082 (JP)**

(74) Representative: **Vossius & Partner
Patentanwälte Rechtsanwälte mbB
Siebertstrasse 3
81675 München (DE)**

(54) **HOT MELT ADHESIVE COMPOSITION AND LAMINATE**

(57)    Provided is a hot-melt adhesive composition improving workability and productivity, and having excellent adhesion to olefin substrates, such as polypropylene, and also excellent adhesion to highly polar substrates, such as PVC and PET, and further having excellent mechanical properties. Provided is a hot-melt adhesive composition comprising an acid-modified polyolefin and a copolymerized polyester, and satisfying the following (1) to (5):

(1) the copolymerized polyester comprises a dicarboxylic acid component and a glycol component, and has a melting point (T1), as determined by a differential scanning calorimeter (DSC), in the range of 80 to 150°C;

(2) the acid-modified polyolefin has a melting point (T2), as determined by a differential scanning calorimeter (DSC), in the range of 60 to 150°C;

(3)

$$|T1-T2| \leq 40°C;$$

(4) when an acid value of the acid-modified polyolefin is defined as AV (eq/ton), and a hydroxy value of the copolymerized polyester is defined as OHV (eq/ton), $0.5 \leq AV/OHV \leq 4.5$; and

(5) the acid-modified polyolefin is contained in an amount of 5 to 40 mass%, and the copolymerized polyester is contained in an amount of 60 to 95 mass%, based on 100 mass% of the total of the acid-modified polyolefin and the copolymerized polyester, and the total amount of the acid-modified polyolefin and the copolymerized polyester is 70 mass% or more based on 100 mass% of the total of the entire hot-melt adhesive composition.

## Description

Technical Field

The present invention relates to a hot-melt adhesive composition and a laminate bonded with the hot-melt adhesive composition.

Background Art

Since olefin resins, such as polypropylene (PP) and propylene-$\alpha$-olefin copolymers, are inexpensive and light, and have excellent strength, chemical resistance, and hydrolysis resistance, they are widely used in various fields, including automobiles and home appliances. In recent years, in particular, there has been a strong demand for weight reduction to improve the fuel efficiency of automobiles, and the use of olefin resins as alternatives for metals has been widely considered. However, such olefin resins do not have polarity, and obtaining molded articles and films thereof with excellent adhesion is difficult. In order to overcome this defect, various techniques, including oxidizing olefin resin surfaces by chemical treatment with chemicals, corona discharge treatment, plasma treatment, flame treatment, etc., have been attempted. However, these methods require special apparatuses, and additionally, adhesion and paintability-improving effects are not considered sufficient.

Chlorinated polyolefins and acid-modified polyolefins have been developed so as to impart excellent paintability and adhesion to olefin resins by a relatively simple method. Since polyolefins are typically insoluble in a solvent, various measures have been attempted, such as chlorination and copolymerization with an $\alpha$-olefin, so as to reduce crystallinity and achieve solubility. Further, since acid modification also reduces crystallinity, resins having relatively good solubility have been obtained by acid modification. However, these resins have low compatibility with polar resins, and satisfactory adhesion to, for example, highly polar resins, such as polyvinyl chloride (PVC) and polyethylene terephthalate (PET), could not be obtained.

To overcome such a problem, an epoxy-based adhesive and a urethane-based adhesive are used for bonding olefin resin and ester resin. These adhesives exhibit excellent mechanical properties by forming a three-dimensional cross-linkage through a reaction between a resin and a curing agent (e.g., Patent Literature (PTL) 1). Further, a resin composition comprising a polyester and a modified polyolefin is disclosed (e.g., PTL 2).

Citation List

Patent Literature

PTL 1: JPH04-323292A
PTL 2: JPH05-86239A

Summary of Invention

Technical Problem

However, the adhesive of PTL 1 is typically a two-component adhesive comprising a resin and a curing agent; thus, problems lie in poor workability since accurate weighing and mixing are required before use. Additionally, gelation occurs in a short period of time after mixing, and the pot life is as short as about several tens of minutes to several hours; thus, problems lie in that the adhesive of PTL 1 is not suitable for automatic application using a dispenser etc., and in that the excess must be discarded. Furthermore, since curing takes several tens of minutes to several hours, productivity is low, which is also a problem. The resin composition of PTL 2 uses a polyester having an amide bond; thus, problems lie in a significant increase in the melt viscosity and a decrease in adhesion due to hydrogen bonds between amide bonds in the polyester and hydrogen bonds between an amide bond and a modified polyolefin.

An object of the present invention is to provide a hot-melt adhesive composition improving the workability and productivity described above, and having excellent adhesion to olefin substrates, such as polypropylene, and also excellent adhesion to highly polar substrates, such as PVC and PET, and further having excellent mechanical properties.

Solution to Problem

To solve the above problems, the present inventors have conducted extensive research and have proposed the following invention. More specifically, the present invention relates to the following hot-melt adhesive composition and laminate using the hot-melt adhesive composition.

A hot-melt adhesive composition comprising an acid-modified polyolefin and a copolymerized polyester, and satisfying the following (1) to (5):

(1) the copolymerized polyester comprises a dicarboxylic acid component and a glycol component, and has a melting point (T1), as determined by a differential scanning calorimeter (DSC), in the range of 80 to 150°C;

(2) the acid-modified polyolefin has a melting point (T2), as determined by a differential scanning calorimeter (DSC), in the range of 60 to 150°C;

(3) $|T1\text{-}T2| \leq 40°C$;

(4) when an acid value of the acid-modified polyolefin is defined as AV (eq/ton), and a hydroxy value of the copolymerized polyester is defined as OHV (eq/ton), $0.5 \leq AV/OHV \leq 4.5$; and

(5) the acid-modified polyolefin is contained in an amount of 5 to 40 mass%, and the copolymerized polyester is contained in an amount of 60 to 95 mass%, based on 100 mass% of the total of the acid-modified polyolefin and the copolymerized polyester, and the total amount of the acid-modified polyolefin and the copolymerized polyester is 70 mass% or more based on 100 mass% of the total of the entire hot-melt adhesive composition.

The acid-modified polyolefin resin is preferably a maleic anhydride-modified polyolefin.

In the copolymerized polyester, the dicarboxylic acid component preferably contains both an aromatic dicarboxylic acid and an aliphatic dicarboxylic acid, and the glycol component is preferably a saturated aliphatic glycol.

A laminate of a polyvinyl chloride substrate and a polyolefin substrate bonded with the hot-melt adhesive composition described above.

Advantageous Effects of Invention

The hot-melt adhesive composition of the present invention comprises both a non-polar component and a polar component in combination by comprising specific amounts of a specific copolymerized polyester and acid-modified polyolefin, whereby the hot-melt adhesive composition of the present invention has excellent adhesion between different types of substrates, i.e., between an olefin substrate, such as polypropylene, and a polar substrate, such as PVC or PET.

Description of Embodiments

The present invention is described below in detail. It is essential for the hot-melt adhesive composition of the present invention to comprise an acid-modified polyolefin and a copolymerized polyester, and satisfies the following (1) to (5).

Hot-melt Adhesive Composition Satisfying (1)

(1) is explained here. The copolymerized polyester for use in the hot-melt adhesive composition of the present invention comprises a dicarboxylic acid component and a glycol component, and has a melting point (T1), as determined by a differential scanning calorimeter (DSC), in the range of 80 to 150°C, preferably 90 to 120°C, and more preferably 95 to 115°C. When T1 is 80°C or higher, the hot-melt adhesive composition tends to have excellent heat resistance. If T1 exceeds 150°C, melting the hot-melt adhesive composition requires a greater amount of heat, which has an adverse effect both economically and environmentally.

Hot-melt Adhesive Composition Satisfying (2)

(2) is explained here. The acid-modified polyolefin for use in the present invention has a melting point (T2), as determined by a differential scanning calorimeter (DSC), in the range of 60 to 150°C, preferably 65 to 125°C, and more preferably 70 to 110°C. If T2 is 60°C or lower, the heat resistance of the hot-melt adhesive composition is decreased. If T2 is 150°C or higher, melting the hot-melt adhesive composition requires a greater amount of heat, which has an adverse effect both economically and environmentally.

Hot-melt Adhesive Composition Satisfying (3)

(3) is explained here. In the hot-melt adhesive composition for use in the present invention, $|T1\text{-}T2| \leq 40$ (°C). It is preferred that $|T1\text{-}T2| \leq 30$ (°C), and it is more preferred that $|T1\text{-}T2| \leq 20$ (°C). If $|T1\text{-}T2|$ exceeds 40°C, only low-melting point components are melted first when bonding by heating is performed, and adhesion strength with respect to polar substrates may be decreased.

Hot-melt Adhesive Composition Satisfying (4)

(4) is explained here. In the hot-melt adhesive composition of the present invention, when the acid value of the acid-modified polyolefin is defined as AV (eq/ton), and the hydroxy value of the copolymerized polyester is defined as OHV (eq/ton), $0.5 \leq AV/OHV \leq 4.5$. It is preferred that $0.8 \leq AV/OHV \leq 3.5$, and it is more preferred that $1.0 \leq AV/OHV \leq 3.0$. If $0.5 > AV/OHV$, the ratio of the hydroxyl groups in the polyester to the acids in the acid-modified polyolefin decreases, which weakens the hydrogen bonds and decreases the melt viscosity. If the melt viscosity is decreased, shearing force is not applied during the production of the hot-melt adhesive composition by melt-kneading, and the acid-modified polyolefin and polyester are not well dispersed, resulting in a decreased adhesion force against substrates. When $AV/OHV \leq 4.5$, the melt viscosity of the hot-melt adhesive composition is not overly high, wettability to substrates is excellent, and in particular, the adhesion force against polyvinyl chloride (PVC) is excellent.

Hot-melt Adhesive Composition Satisfying (5)

(5) is explained here. The hot-melt adhesive composition of the present invention comprises 5 to 40 mass% of the acid-modified polyolefin and 60 to 95 mass% of the copolymerized polyester, based on 100 mass% of the total of the acid-modified polyolefin and the copolymerized polyester. The amount of the acid-modified polyolefin is preferably 20 to 40 mass%, and the amount of the copolymerized polyester is preferably 60 to 80 mass%. The amount of the acid-modified polyolefin is more preferably 25 to 35 mass%, and the amount of the copolymerized polyester is more preferably 65 to 75 mass%. If the formulation is outside the above ranges, the polarity will be out of balance in adhesion to different types of substrates, and an excellent adhesion force against both substrates cannot be obtained. Further, while satisfying the above ranges, the formulation of the acid-modified polyolefin and the copolymerized polyester must satisfy that the total amount of the acid-modified polyolefin and the copolymerized polyester is 70 mass% or more, preferably 80 mass% or more, and more preferably 90 mass% or more, based on 100 mass% of the total of the entire hot-melt adhesive composition.

Acid-modified Polyolefin

Examples of polyolefins to be acid-modified to obtain the acid-modified polyolefin for use in the present invention include polyethylene, polypropylene, ethylene-propylene copolymers, propylene-butene copolymers, and ethylene-propylene-butene copolymers. Among these, one or more members selected from the group consisting of polypropylene, ethylene-propylene copolymers, and ethylene-propylene-butene copolymers (also referred to below as "propylene-based polymers") are desirable in terms of heat resistance and compatibility with the copolymerized polyester. The amount of the propylene component in the propylene-based polymer is preferably 50 mol% or more, and more preferably 70 mol% or more. The polyolefin to be acid-modified for use may be one obtained by copolymerizing an unsaturated acid and an alkyl ester of unsaturated acid, such as a (meth)acrylic acid and a (meth)acrylic acid ester, vinyl acetate, ethylene, propylene, and an $\alpha$-olefin.

The acid-modified polyolefin for use in the present invention is preferably obtained by graft polymerization (also referred to below as "acid modification") of at least one member selected from the group consisting of unsaturated carboxylic acids having 3 to 10 carbon atoms, acid anhydrides thereof, and esters thereof. The weight of the graft chain based on the entire acid-modified polyolefin (also referred to below as the "acid modification amount") is preferably 0.5 to 10 mass%, and more preferably 0.7 to 3 mass%. If the weight fraction of the graft chain is out of the above ranges, adhesion to polyolefin substrates may be decreased.

Examples of the unsaturated carboxylic acids having 3 to 10 carbon atoms, acid anhydrides thereof, and esters thereof include unsaturated carboxylic acids, such as acrylic acid, methacrylic acid, maleic acid, fumaric acid, itaconic acid, and citraconic acid; acid anhydrides of unsaturated carboxylic acids, such as maleic anhydride, itaconic anhydride, and citraconic anhydride; and alkyl esters of unsaturated carboxylic acids, such as methyl acrylate, methyl methacrylate, and dimethyl maleate. Among these, maleic acid, itaconic acid, and acid anhydrides thereof are preferred.

Graft polymerization for producing the acid-modified polyolefin in the present invention may be performed according to a known method, and the method is not limited. For example, graft polymerization may be performed by adding an organic peroxide to a molten mixture of the polyolefin and the unsaturated carboxylic acid component described above. Alternatively, graft polymerization may be performed by adding an organic peroxide to a mixture solution obtained by dissolving the polyolefin and the unsaturated carboxylic acid component described above in a solvent, such as toluene or xylene. In graft polymerization, it is preferable to avoid incorporation of air and oxygen. Graft polymerization is preferably performed in an inert gas atmosphere, such as nitrogen gas. Examples of the organic peroxide include acetylcyclohexylsulfonyl peroxide, benzoyl peroxide, dichlorobenzoyl peroxide, dicumyl peroxide, di-tert-butyl peroxide, and lauroyl peroxide. These may be used singly or in a combination of two or more.

The melt viscosity of the acid-modified polyolefin at 190°C is preferably 1,000 to 20,000 mPa·s, more preferably 2,000 to 15,000 mPa·s, and still more preferably 3,000 to 13,000 mPa·s. If the melt viscosity is 1,000 mPa·s or less, the cohesive force is low, and adhesion strength to substrates is thus decreased. If the melt viscosity is 20,000 mPa·s or more, the adhesiveness to substrates is decreased. Further, the melt viscosity of the copolymerized polyester at 190°C is preferably 220,000 mPa·s or less, and more preferably 200,000 mPa·s or less. If the melt viscosity is more than 220,000 mPa·s, the adhesiveness to substrates is decreased.

The melting point T1 of the acid-modified polyolefin is preferably 60°C or higher, more preferably 65°C or higher, and still more preferably 70°C or higher. The melting point T1 is preferably 150°C or lower, more preferably 140°C or lower, and still more preferably 130°C or lower. If the melting point of the acid-modified polyolefin is lower than 60°C, the adhesion may be significantly decreased due to an increase in the temperature in the environment in which it is used. If the melting point is higher than 150°C, olefin substrates may be melted during bonding. Further, when the melting point of the copolymerized polyester is defined as T2, it is preferable that $|T1-T2| \leq 40$ (°C). If $|T1-T2|$ exceeds 40°C, only low-melting point components are melted first when bonding by heating is performed, and adhesion strength with respect to polar substrates may be decreased.

The weight average molecular weight (Mw) of the acid-modified polyolefin is preferably 30,000 to 120,000, more preferably 40,000 to 110,000, and still more preferably 50,000 to 100,000. The number average molecular weight (Mn) is preferably 10,000 to 70,000, more preferably 15,000 to 60,000, and still more preferably 20,000 to 55,000. Further, the molecular weight distribution (Mw/Mn) is preferably 3 or less, and more preferably 2.8 or less. By using the acid-modified polyolefin in the above ranges, the compatibility with the copolymerized polyester improves, and excellent adhesion of the hot-melt adhesive composition can be obtained.

The AV of the acid-modified polyolefin is preferably 50 to 500, more preferably 100 to 400, and still more preferably 150 to 300. If 50 > AV, adhesiveness of the acid-modified polyolefin to polyolefin substrates is low, and the adhesion force is thus decreased. If 500 < AV, the cohesive force of the acid-modified polyolefin is decreased, and the adhesion force is decreased.

Copolymerized Polyester

The copolymerized polyester for use in the present invention can be obtained, for example, by dehydration condensation or dealcoholization condensation of a dicarboxylic acid component, such as a dicarboxylic acid, an anhydride thereof, or an alkyl ester thereof, and a glycol component.

Examples of the compound forming the dicarboxylic acid component include aromatic dibasic acids, such as terephthalic acid, isophthalic acid, orthophthalic acid, 1,2-naphthalenedicarboxylic acid, and 1,6-naphthalenedicarboxylic acid; and

aliphatic dicarboxylic acids and alicyclic dicarboxylic acids, such as succinic acid, adipic acid, azelaic acid, sebacic acid, dodecanoic acid, dimer acid, hydrogenated dimer acid, dodecenyl succinic anhydride, fumaric acid, dodecanedioic acid, 1,2-cyclohexanedicarboxylic acid, 1,4-cyclohexanedicarboxylic acid, 4-methyl-1,2-cyclohexanedicarboxylic acid, hexahydrophthalic anhydride, tetrahydrophthalic anhydride, maleic acid, maleic anhydride, itaconic acid, and citraconic acid.

It is preferable that an aromatic dicarboxylic acid is contained in an amount of preferably 40 mol% or more, more preferably 45 mol% or more, and still more preferably 50 mol% or more, based on 100 mol% of the entire dicarboxylic acid component. The upper limit is not limited and may be 100 mol%. The upper limit is preferably 95 mol% or less, and more preferably 90 mol% or less. The content of the aliphatic dicarboxylic acid and alicyclic dicarboxylic acid is preferably 60 mol% or less, more preferably 55 mol% or less, and still more preferably 50 mol% or less. An overly small amount of the aromatic dicarboxylic acid or overly large amounts of the aliphatic dicarboxylic acid and alicyclic dicarboxylic acid can decrease the adhesion and the heat resistance of the hot-melt adhesive composition.

The OHV of the copolymerized polyester is preferably 20 to 200, more preferably 30 to 170, and still more preferably 50 to 150. If 30 > OHV, the interaction with the acid-modified polyolefin is small, and dispersion becomes insufficient at the time of melt-kneading. If 150 < OHV, the adhesiveness to polyolefin substrates is decreased when an adhesive layer is bonded.

Examples of other glycol components include aliphatic diols, such as ethylene glycol, diethylene glycol, triethylene glycol, 1,2-propylene glycol, 1,3-propylene glycol, 1,2-butylene glycol, 1,3-butylene glycol, 2,3-butylene glycol, 1,4-butylene glycol, 2-methyl-1,3-propylene glycol, neopentyl glycol, 1,6-hexamethylene glycol, 3-methyl-1,5-pentanediol, 2,2,4-trimethyl-1,3-pentanediol, 2,4-diethyl-1,5-pentanediol, 2-ethyl-1,3-hexanediol, 2,2-dimethyl-3-hydroxypropyl-2',2'-dimethyl-3'-hydroxypropanate, 2-(n-butyl)-2-ethyl-1,3-propanediol, 3-ethyl-1,5-pentanediol, 3-propyl-1,5-pentanediol, 2,2-diethyl-1,3-propanediol, and 3-octyl-1,5-pentanediol; alicyclic glycols, such as 1,3-bis(hydroxymethyl)cyclohexane, 1,4-bis (hydroxymethyl)cyclohexane, 1,4-bis(hydroxyethyl)cyclohexane, 1,4-bis(hydroxypropyl)cyclohexane, 1,4-bis(hydroxymethoxy)cyclohexane, 1,4-bis(hydroxyethoxy)cyclohexane, 2,2-bis(4-hydroxymethoxycyclohexyl)propane, 2,2-bis(4-hydroxyethoxycyclohexyl)propane, bis(4-hydroxycyclohexyl)methane, 2,2-bis(4-hydroxycyclohexyl)propane, and 3(4),8(9)-tricyclo[5.2.1.02,6]decanedimethanol; aromatic glycols, such as ethylene oxide adducts and propylene oxide adducts of bisphenol A; and polyethylene glycol, polypropylene glycol, and polytrimethylene glycol. These may be used singly or in a combination of two or more.

Further, for the copolymerized polyester for use in the present invention, copolymerization may be performed by partly substituting the dicarboxylic acid component with a trifunctional or higher functional carboxylic acid, or partly substituting the glycol component with a trifunctional or higher functional polyol. Examples of these trifunctional or higher functional compounds include polyvalent carboxylic acids, such as trimellitic acid, pyromellitic acid, benzophenonetetracarboxylic acid, biphenyltetracarboxylic acid, ethylene glycol bis(anhydrotrimellitate), and glycerol tris(anhydrotrimellitate), and anhydrides thereof, and polyfunctional glycols, such as trimethylolpropane, pentaerythritol, glycerin, and polyglycerin.

Further, for the copolymerized polyester for use in the present invention, copolymerization or post-addition of glycolic acid, lactones, lactides, and (poly)carbonates, post-addition of acid anhydrides, and copolymerization of glycolic acid, can also be performed.

The copolymerized polyester for use in the present invention preferably does not contain an amide bond in the main chain. The amount of amide bonds in the main chain of the copolymerized polyester is preferably less than $5 \times 10^{-4}$ mol, more preferably $1 \times 10^{-4}$ mol or less, and still more preferably $1 \times 10^{-5}$ mol or less, per 100 g of the copolymer polyester. An amount of amide bonds of $5 \times 10^{-4}$ mol or more may significantly increase the melt viscosity and decrease adhesion, due to hydrogen bonds between amide bonds in the copolymerized polyester, and hydrogen bonds between an amide bond and an acid-modified portion in the acid-modified polyolefin.

The melt viscosity of the copolymerized polyester at 190°C is preferably 220,000 mPa·s or less, and more preferably 200,000 mPa·s or less. A melt viscosity of 220,000 mPa·s or less achieves excellent adhesiveness to substrates.

The melting point T2 of the copolymerized polyester is preferably 80°C or higher, more preferably 85°C or higher, and still more preferably 90°C or higher. The melting point T2 is preferably 150°C or lower, more preferably 130°C or lower, and still more preferably 120°C or lower. If T2 is lower than 80°C, the adhesion may be significantly decreased due to an increase in the temperature in the environment in which it is used. If T2 is higher than 150°C, olefin substrates may be melted during bonding.

The copolymerized polyester may be a crystalline copolymerized polyester or a non-crystalline copolymerized polyester. The copolymerized polyester is preferably a crystalline copolymerized polyester. Crystalline copolymerized polyesters are expected to improve adhesion strength by improving the strength of the resin by crystallization.

Further, it is preferable to add an antioxidant to the hot-melt adhesive composition of the present invention. Examples of preferred antioxidants include hindered phenol-based antioxidants, phosphorus-based antioxidants, sulfur-based antioxidants, and amine-based antioxidants. These antioxidants may be used singly or in a combination of two or more. In particular, it is effective to use a hindered phenol-based antioxidant in combination with another antioxidant. Further, it is desirable to add a heat-aging inhibitor, a copper inhibitor, an antistatic agent, a light-resistant stabilizer, an ultraviolet absorber, and other stabilizers. In particular, it is desirable to use a phenol-based antioxidant containing a phosphorus atom in the molecule from the viewpoint of efficient radical capturing. It is also possible to further add a crystal nucleating agent, a flame retardant, and the like.

Examples of the hindered phenol-based antioxidants and stabilizers include 1,3,5-tris(3,5-di-tert-butyl-4-hydroxybenzyl)isocyanurate, 1,1,3-tri(4-hydroxy-2-methyl-5-t-butylphenyl)butane, 1,1-bis(3-t-butyl-6-methyl-4-hydroxyphenyl)butane, 3,5-bis(1,1-dimethylethyl)-4-hydroxy-benzenepropanoic acid, pentaerythritol tetrakis[3-(3,5-di-t-butyl-4-hydroxyphenyl)propionate], 3-(1,1-dimethylethyl)-4-hydroxy-5-methyl-benzenepropanoic acid, 3,9-bis[1,1-dimethyl-2-[(3-t-butyl-4-hydroxy-5-methylphenyl)propionyloxy]ethyl]-2,4,8,10-tetraoxaspiro[5.5]undecane, 1,3,5-trimethyl-2,4,6-tris(3',5'-di-t-butyl-4'-hydroxybenzyl)benzene, thiodiethylene bis[3-(3,5-di-tert-butyl-4-hydroxyphenyl)propionate], octadecyl-3-(3,5-di-tert-butyl-4-hydroxyphenyl)propionate, N,N'-hexane-1,6-diylbis[3-(3,5-di-tert-butyl-4-hydroxyphenylpropionamide), 3,3',3",5,5',5"-hexa-tert-butyl-a,a',a"-(mesitylene-2,4,6-triyl)tri-p-cresol, diethyl[[3,5-bis[1,1-dimethylethyl]-4-hydroxyphenyl]methyl]phosphate, 4,4'-butylidenebis(3-methyl-6-t-butylphenol), 2'3-bis[[3-[3,5-di-tert-butyl-4-hydroxyphenyl]propionyl]]propionohydrazide, and 3,9-bis[2-{3-(3-tert-butyl-4-hydroxy-5-methylphenyl)propionyloxy}-1,1-dimethylethyl]-2,4-8,10-tetraoxaspiro[5.5]undecane.

Examples of the phosphorus-based antioxidants and stabilizers include 3,9-bis(p-nonylphenoxy)-2,4,8,10-tetraoxa-3,9-diphosphaspiro[5.5]undecane, 3,9-bis(octadecyloxy)-2,4,8,10-tetraoxa-3,9-diphosphaspiro[5.5]undecane, tri(mononnonylphenyl)phosphite, triphenoxyphosphine, isodecyl phosphite, isodecyl phenyl phosphite, diphenyl 2-ethylhexyl phosphite, dinonylphenyl bis(nonylphenyl)ester phosphorus acid, 1,1,3-tris(2-methyl-4-ditridecylphosphite-5-t-butylphenyl)butane, tris(2,4-di-tert-butylphenyl)phosphite, pentaerythritol bis(2,4-di-tert-butylphenyl phosphite), 2,2'-methylenebis(4,6-di-tert-butylphenyl)2-ethylhexyl phosphite, bis(2,6-di-tert-butyl-4-methylphenyl)pentaerythritol diphosphite, bis[2,4-bis[1,1-dimethylethyl]-6-methylphenyl]ethyl ester phosphite, 6-[3-(3-tert-butyl-4-hydroxy-5-methyl)propoxy]-2,4,8,10-tetra-tert-butyldibenz[d,f][1,3,2]-dioxaphosphepine, tetrakis(2,4-di-tert-butylphenyl) [1,1-biphenyl]-4,4'-diylbisphosphonite, and bis(2,4-di-tert-butylphenyl)pentaerythritol diphosphite.

Examples of the sulfur-based antioxidants and stabilizers include 4,4'-thiobis[2-tert-butyl-5-methylphenol]bis[3-(dodecylthio)propionate], thiobis[2-(1,1-dimethylethyl)-5-methyl-4,1-phenylene]bis[3-(tetradecylthio)-propionate], pentaerythritol tetrakis(3-n-dodecylthiopropionate), bis(tridecyl)thiodipropionate, didodecyl-3,3'-thiodipropionate, dioctadecyl-3,3'-thiodipropionate, 4,6-bis(octylthiomethyl)-o-cresol, and 4,4-thiobis(3-methyl-6-tert-butylphenol).

Examples of the amine-based antioxidants and stabilizers include 4,4'-bis($\alpha,\alpha$-dimethylbenzyl)diphenylamine, 2',3-bis[[3-[3,5-di-tert-butyl-4-hydroxyphenyl]propionyl]]propionohydrazide, N,N'-di-2-naphthyl-p-phenylenediamine, N-phenyl-N'-4,4'-thiobis(2-t-butyl-5-methylphenol), and 2,2-bis[3-(dodecylthio)propanoyloxymethyl]-1,3-propanediol bis[3-(dodecylthio)propionate].

The amount of the antioxidant added is preferably 0.1 mass% or more and 5 mass% or less based on the entire hot-melt adhesive composition. An amount of less than 0.1 mass% results in an insufficient effect in terms of preventing thermal deterioration. An amount exceeding 5 mass% may adversely affect adhesion etc.

The hot-melt adhesive composition of the present invention may comprise other resins, such as an epoxy resin, a polyamide resin, a polyolefin resin, a polycarbonate resin, an acrylic resin, an ethylene vinyl acetate resin, and a phenol resin, as long as the performance of the present invention is not impaired, whereby adhesion, flexibility, durability, etc., may be improved. The content of the other resins is preferably less than 5 mass% based on the entire hot-melt adhesive composition. Additionally, the hot-melt adhesive composition of the present invention may also comprise curing agents, such as an isocyanate compound and melamine, fillers, such as talc and mica, pigments, such as carbon black and titanium oxide, and flame retardants, such as antimony trioxide and brominated polystyrene.

The hot-melt adhesive composition of the present invention may comprise tackifiers, such as rosin and terpene, whereby adhesion may be improved. The content is preferably less than 5 mass% based on the entire hot-melt adhesive composition.

The method for producing the hot-melt adhesive composition of the present invention is not limited. Examples include a method of melt-kneading with an extruder, such as a single-screw extruder or a twin-screw extruder; a method of directly obtaining a molded article by blending pellets, followed by melt-kneading with a molding machine etc.; a method of adding in advance the acid-modified polyolefin at the time of polymerization of the copolymerized polyester, followed by mixing; and a method of blending the acid-modified polyolefin and the copolymerized polyester in a solution. A method of using a twin-screw extruder, which is capable of applying a high shear stress, is particularly preferred. When a twin-screw extruder is used, melt-kneading is preferably performed at a temperature higher than the melting points of the acid-modified polyolefin and copolymerized polyester for use. Specifically, melt-kneading is preferably performed at 150 to 300°C.

Substrate

Polar substrates for use in the present invention may be substrates of polyethylene terephthalate (PET), polyvinyl chloride (PVC), and the like. Polyolefin substrates for use may be, but are not limited to, substrates of polyethylene (PE), polypropylene (PP), and the like. In particular, a combination of PVC and PP is preferred.

Laminate

The laminate of the present invention is a three-layer laminate in which a polar substrate and a polyolefin substrate are stacked with a hot-melt adhesive composition (the polar substrate/hot-melt adhesive composition layer/polyolefin substrate). The laminate can be produced by, for example, stacking or applying the hot-melt adhesive composition on a polyester substrate (or a polyolefin substrate), sandwiching the hot-melt adhesive composition by further stacking or applying a polyolefin substrate (or a polyester substrate) thereon, followed by thermocompression bonding. The thickness of the hot-melt adhesive composition layer in the laminate is preferably 5 to 200 μm, more preferably 10 to 100 pm, and still more preferably 15 to 50 um. An overly thin thickness can result in insufficient adhesion properties, and an overly thick thickness can decrease the productivity.

Examples

The present invention is described below in more detail with reference to Examples. However, the present invention is not limited to the Examples. In the Examples and Comparative Examples, the simple expression "part" indicates "parts by mass," and "%" indicates "mass%."

Evaluation Method for Resin and Hot-melt Adhesive Composition

Formulation Ratio

The formulation ratio was determined by dissolving a sample (a copolymerized polyester or an acid-modified polyolefin) in chloroform-d and subjecting it to $^1$H NMR analysis using a nuclear magnetic resonance (NMR) spectrometer (Gemini 200, produced by Varian Medical Systems).

Acid Value (AV) of Acid-modified Polyolefin

The acid value (eq/ton) of the acid-modified polyolefin in the present invention was calculated on an equivalent per ton (eq/ton) basis per ton of the resin using FT-IR (FT-IR8200PC, produced by Shimadzu Corporation). More specifically, the acid value in the present invention refers to a value calculated according to the following formula using an absorption (I) of the stretching peak (1780 cm$^{-1}$) of the carbonyl bond (C=O) in maleic anhydride, an absorption (II) of isotactic-specific peak (840 cm$^{-1}$), and a factor (f) obtained from a calibration curve prepared using a chloroform solution of maleic anhydride (produced by Tokyo Chemical Industry Co., Ltd.).

```
Acid value = [the absorbance (I)/absorbance (II) × (f)/the
molecular weight of maleic anhydride × 2 × 104]
```

Molecular weight of maleic anhydride: 98.06

Hydroxy Value (OHV) of Copolymerized Polyester

The hydroxy value of the copolymerized polyester in the present invention was determined as follows. A copolymerized polyester (50 g) was dissolved in hot chloroform (120 g), 4,4'-diphenylmethane diisocyanate (70 g) was added thereto, and the mixture was reacted at 70°C for 2 hours. Thereafter, the concentration of residual isocyanate groups in the reaction liquid was quantified by titration to thus determine the hydroxy value (eq/ton).

Melt Viscosity

A resin sample (a copolymerized polyester or an acid-modified polyolefin) dried to a moisture content of 0.1% or less was filled in a cylinder at the center of the heating element set at 190°C in a flowtester (model: CFT-500C) produced by Shimadzu Corporation. Three minutes after the sample was filled, pressure was applied (4.9 MPa) to the sample via a plunger to extrude a molten sample from the die (hole diameter: 0.5 mm, thickness: 20 mm) at the bottom of the cylinder, the depth and time of plunger drop were recorded, and the melt viscosity (mPa·s) was calculated.

Weight Average Molecular Weight (Mw) and Number Average Molecular Weight (Mn)

Mw and Mn in the present invention are values measured by an Alliance e2695 gel permeation chromatograph (also referred to below as "GPC"; standard substance: polystyrene resin, mobile phase: tetrahydrofuran, column: Shodex KF-806 + KF-803, column temperature: 40°C, flow rate: 1.0 mL/min, detector: photodiode array detector (wavelength: 254 nm = UV light)) produced by Nihon Waters K.K.

Melting Point

The melting point was determined by using a DSC220 differential scanning calorimeter produced by Seiko Instruments Inc. 5 mg of a measurement sample (a copolymerized polyester or an acid-modified polyolefin) was placed in an aluminum pan, and the pan was sealed while pressing a lid. The sample was held at 250°C for 5 minutes to be completely molten, and was then rapidly cooled with liquid nitrogen. Thereafter, measurement was performed at a temperature rise rate of 20°C/min from -150°C to 250°C. The maximum endothermic peak in the obtained thermogram curve was determined to be the melting point.

Production of sheet-like Sample of Hot-melt Adhesive Composition

A sheet-like sample of the hot-melt adhesive composition with a thickness of 20 μm was formed at a temperature of 160°C, a holding pressure of 20 MPa, and pressure-holding time of 10 seconds using an SA-302 tabletop test press, produced by Tester Sangyo Co., Ltd.

Evaluation of Adhesion Strength

A sample for adhesion strength measurement was formed by sandwiching the sheet-like sample between a PVC film (Bonlex BE, thickness: 50 pm) produced by C.I. TAKIRON Corporation and a polypropylene plate (thickness: 2.5 mm) produced by Nippon Testpanel Co., Ltd., and holding the pressure at 0.1 MPa at 140°C for 120 seconds using an IMC-0800 heat seal tester produced by Imoto Machinery Co., Ltd. The 180° peeling adhesion strength was measured by cutting the sample for adhesion strength measurement to a 10-mm width, holding the PVC film of the sample for adhesion strength measurement with the upper chuck of a tensile tester produced by Shimadzu Corporation while holding the polypropylene plate with the lower chuck, and pulling up and down at a pulling rate of 50 mm/min using an Autograph AGX-V in an environment at 23°C and 60% Rh. The evaluation was made based on the measured values and comprehensive evaluation.

Comprehensive Evaluation

A: Cohesive failure occurred in the hot-melt adhesive composition, and the peel strength was 15 N/10 mm or more.
B: (1) The hot-melt adhesive composition was peeled off at the interface of the polypropylene plate or the PVC film, and the peel strength was 10 N/10 mm or more, or (2) cohesive failure occurred in the hot-melt adhesive composition, and the peel strength was in the range of 10 N/10 mm or more and less than 15 N/10 mm.
C: The peel strength was less than 10 N/10 mm.

Production Examples and Examples

Production Example of Acid-modified Polyolefin (a)

100 parts by mass of a crystalline polypropylene (polyolefin resin 1), 8 parts by mass of maleic anhydride, 2 parts by mass of dicumyl peroxide, and 150 parts by mass of toluene were placed in an autoclave equipped with a stirrer. After the autoclave was sealed, a nitrogen purge was performed for 5 minutes. The reaction was then allowed to proceed at 140°C for 5 hours with heating and stirring. After the reaction was completed, the reaction liquid was poured into a large amount of methyl ethyl ketone, and the resin was precipitated. The precipitated resin was collected, further washed several times with methyl ethyl ketone, and then dried to thus obtain an acid-modified polyolefin (a). Table 1 shows the formulation and properties.

Production Examples of Acid-modified Polyolefins (b) to (f)

The acid-modified polyolefins (b) to (e) were obtained in the same manner as for the acid-modified polyolefin (a), except that the type of the polyolefin resin to be modified was changed. Table 1 shows the formulation and properties of each of the acid-modified polyolefins.

Table 1

| Acid-modified polyolefin | | a | b | c | d | e |
|---|---|---|---|---|---|---|
| Formulation for resin production (parts by mass) | Polyolefin resin 1 | 100 | 100 | | | |
| | Polyolefin resin 2 | | | 100 | | |
| | Polyolefin resin 3 | | | | 100 | 100 |
| | Maleic anhydride | 8 | 6 | 8 | 15 | 20 |
| | Dicumyl peroxide | 2 | 2 | 2 | 2 | 2 |
| Resin properties | Amount of acid added (eq/ton) | 200 | 160 | 220 | 300 | 400 |
| | Melt viscosity (mPa•s at 190°C) | 6000 | 10000 | 6000 | 5000 | 4000 |
| | Melting point (°C) | 70 | 70 | 90 | 125 | 125 |
| Polyolefin resin 1: A propylene-butene (= 70/30 (molar ratio)) copolymer (weight average molecular weight: 230,000) Polyolefin resin 2: A propylene-butene (= 90/10 (molar ratio)) copolymer (weight average molecular weight: 180,000) Polyolefin resin 3: A propylene-ethylene-butene (= 70/10/20 (molar ratio)) copolymer (weight average molecular weight: 170,000) | | | | | | |

Production Example of Copolymerized Polyester (A)

30 parts by mass of terephthalic acid, 20 parts by mass of isophthalic acid, 50 parts by mass of adipic acid, 100 parts by mass of 1,4-butanediol, and 0.25 parts by mass of tetrabutyl titanate were added to a reaction vessel equipped with a stirrer, a thermometer, and a condenser for distillation, followed by esterification reaction at 170 to 220°C for 2 hours. After completion of the esterification reaction, 0.5 parts by mass of a hindered phenol-based antioxidant (Irganox (registered trademark) 1330, produced by BASF Japan) was added. While the temperature was increased to 255°C, the pressure in the system was slowly reduced over 60 minutes to 665 Pa at 255°C. Thereafter, a polycondensation reaction was further performed at 133 Pa or less for 30 minutes to thus obtain a polyester resin (A). The polyester resin (A) had a melting point of 110°C, and a melt viscosity at 190°C of 180,000 mPa·s.

Production Examples of Copolymerized Polyesters (B) to (D)

Copolymerized polyester resins (B) to (D) were obtained in the same manner as for the copolymerized polyester (A), except that the dicarboxylic acid component and glycol component were changed. Table 2 shows the properties of each resin.

Table 2

| Copolymerized polyester | | | A | B | C | D |
|---|---|---|---|---|---|---|
| Formulation mol% | Dicarboxylic acid component | TPA | 30 | 60 | 65 | 50 |
| | | IPA | 20 | | 35 | 40 |
| | | AA | 50 | 40 | | 10 |
| | Glycol component | EG | | 40 | | |
| | | BD | 100 | 59 | 80 | 100 |
| | | PTMG1000 | | 1 | 20 | |
| Resin properties | OHV (eq/ton) | | 70 | 80 | 100 | 100 |
| | Melt viscosity (mPa•s at 190°C) | | 180000 | 160000 | 200000 | 210000 |
| | Melting point (°C) | | 110 | 90 | 125 | 130 |
| TPA: terephthalic acid<br>IPA: isophthalic acid<br>AA: adipic acid<br>EG: ethylene glycol<br>BD: 1,4-butanediol<br>PTMG1000: polytetramethylene glycol (number average molecular weight: 1,000) | | | | | | |

Example 1

Hot-melt Adhesive Composition (1)

A hot-melt adhesive composition (1) was obtained by adding 30 parts by mass of the acid-modified polyolefin (a) as an acid-modified polyolefin and 70 parts by mass of the copolymerized polyester (A) as a copolymerized polyester, and melt-kneading the mixture at 190°C using a twin-screw extruder. The adhesion strength measured by the method described above was found to be 20 N/cm. Table 3 shows the formulation and properties.

Examples 2 to 9 and Comparative Examples 1 to 8

Production Examples 2 to 17 of Hot-melt Adhesive Composition

Hot-melt adhesive compositions 2 to 17 were obtained in the same manner as in Production Example 1, according to the combinations shown in Tables 3 and 4. The adhesion strength was measured according to the method described above. Tables 3 and 4 show the formulations and properties.

Table 3

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Hot-melt adhesive composition | | 1 | 2 | 3 | 4 | 5 | 6 | 7 | 8 | 9 |
| Formulation of composition (parts by mass) | Copolymerized polyester (A) | 70 | 90 | 60 | 70 | 70 | 70 | | | |
| | Copolymerized polyester (B) | | | | | | | 70 | | |
| | Copolymerized polyester (C) | | | | | | | | 70 | |
| | Copolymerized polyester (D) | | | | | | | | | 70 |
| | Acid-modified polyolefin (a) | 30 | 10 | 40 | | | | 30 | | |
| | Acid-modified polyolefin (b) | | | | 30 | | | | | |
| | Acid-modified polyolefin (c) | | | | | 30 | | | | |
| | Acid-modified polyolefin (d) | | | | | | 30 | | 30 | |
| | Acid-modified polyolefin (e) | | | | | | | | | 30 |
| Physical properties of composition | AV/OHV | 2.9 | 2.9 | 2.9 | 2.3 | 3.1 | 4.3 | 2.5 | 3.0 | 4.0 |
| | $|T1-T2|$ | 40 | 40 | 40 | 40 | 20 | 15 | 20 | 0 | 5 |
| | Adhesion strength (N/10 mm) | 20 | 16 | 16 | 22 | 23 | 22 | 19 | 29 | 31 |
| | Mode of failure | Cohesive failure | Interfacial failure | Interfacial failure | Cohesive failure | Interfacial failure | Interfacial failure | Cohesive failure | Interfacial failure | Interfacial failure |
| | Comprehensive evaluation | A | B | B | A | B | B | A | B | B |

EP 4 316 825 A1

Table 4

| | | Comp. Ex. 1 | Comp. Ex 2 | Comp. Ex 3 | Comp. Ex. 4 | Comp. Ex 5 | Comp. Ex 6 | Comp. Ex 7 | Comp. Ex 8 |
|---|---|---|---|---|---|---|---|---|---|
| Hot-melt adhesive composition | | 10 | 11 | 12 | 13 | 14 | 15 | 16 | 17 |
| Formulation of composition (parts by mass) | Copolymerized polyester (A) | 98 | 50 | 70 | | 100 | | 70 | 35 |
| | Copolymerized polyester (B) | | | | | | | | |
| | Copolymerized polyester (C) | | | | | | | | |
| | Copolymerized polyester (D) | | | | 70 | | | | |
| | Acid-modified polyolefin (a) | 2 | 50 | | 30 | | 100 | | 15 |
| | Acid-modified polyolefin (b) | | | | | | | | |
| | Acid-modified polyolefin (c) | | | | | | | | |
| | Acid-modified polyolefin (d) | | | | | | | | |
| | Acid-modified polyolefin (e) | | | 30 | | | | | |
| | Unmodified polyolefin | | | | | | | 30 | 50 |

(continued)

| | | Comp. Ex. 1 | Comp. Ex 2 | Comp. Ex 3 | Comp. Ex. 4 | Comp. Ex 5 | Comp. Ex 6 | Comp. Ex 7 | Comp. Ex 8 |
|---|---|---|---|---|---|---|---|---|---|
| Hot-melt adhesive composition | | 10 | 11 | 12 | 13 | 14 | 15 | 16 | 17 |
| Physical properties of composition | AV/OHV | 2.9 | 2.9 | 5.7 | 2 | - | - | - | 2.9 |
| | \|T1-T2\| | 40 | 40 | 15 | 60 | - | - | - | 40 |
| | Adhesion strength (N/10mm) | 0.4 | 5.5 | 4.7 | 6.1 | 0.3 | 0.2 | 0.3 | 3.3 |
| | Mode of failure | Interfacial failure | Interfacial failure | Cohesive failure | Interfacial failure | Interfacial failure | Interfacial failure | Interfacial failure | Cohesive failure |
| | Comprehensive evaluation | C | C | C | C | C | C | C | C |
| Unmodified polyolefin: J-700GP (homopolypropylene produced by Prime Polymer Co., Ltd.) | | | | | | | | | |

EP 4 316 825 A1

Examples 1 to 9 satisfied the range stated in the claims and also had excellent adhesion strength. Comparative Example 1 contained more than 95 mass% of the copolymerized polyester, which is outside the range of the present invention, and showed decreased adhesion to the PP film. Comparative Example 2 contained more than 50 mass% of the acid-modified polyolefin, which is outside the range of the present invention, and showed decreased adhesion to the PVC film. Comparative Example 3 had an AV/OHV of 4.5 or more, which is outside the range of the present invention, and showed decreased adhesion to the PP and PVC films. In Comparative Example 4, |T1-T2| > 40. Since dispersion of the adhesive layer was non-uniform, adhesion of Comparative Example 4 was low. Comparative Example 5, which did not contain an acid-modified polyolefin, showed decreased adhesion to PP. Comparative Example 6, which did not contain a copolymerized polyester, showed decreased adhesion to PVC. Comparative Example 7, which was obtained by using an unmodified polyolefin instead of an acid-modified polyolefin, showed decreased adhesion to the PP substrate. Comparative Example 8, which contained the acid-modified polyolefin and copolymerized polyester in a total amount of less than 70 mass% based on 100 mass% of the total of the entire hot-melt adhesive composition, showed decreased adhesion.

## Claims

1. A hot-melt adhesive composition comprising an acid-modified polyolefin and a copolymerized polyester, and satisfying the following (1) to (5):

   (1) the copolymerized polyester comprises a dicarboxylic acid component and a glycol component, and has a melting point (T1), as determined by a differential scanning calorimeter (DSC), in the range of 80 to 150°C;
   (2) the acid-modified polyolefin has a melting point (T2), as determined by a differential scanning calorimeter (DSC), in the range of 60 to 150°C;
   (3)

$$|T1-T2| \leq 40°C;$$

   (4) when an acid value of the acid-modified polyolefin is defined as AV (eq/ton), and a hydroxy value of the copolymerized polyester is defined as OHV (eq/ton), $0.5 \leq AV/OHV \leq 4.5$; and
   (5) the acid-modified polyolefin is contained in an amount of 5 to 40 mass% based on 100 mass% of the total of the acid-modified polyolefin and the copolymerized polyester, and the total amount of the acid-modified polyolefin and the copolymerized polyester is 70 mass% or more based on 100 mass% of the total of the entire hot-melt adhesive composition.

2. The hot-melt adhesive composition according to claim 1, wherein the acid-modified polyolefin resin is a maleic anhydride-modified polyolefin.

3. The hot-melt adhesive composition according to claim 1 or 2, wherein in the copolymerized polyester, the dicarboxylic acid component contains both an aromatic dicarboxylic acid and an aliphatic dicarboxylic acid, and the glycol component is a saturated aliphatic glycol.

4. A laminate of a polyvinyl chloride substrate and a polyolefin substrate bonded with the hot-melt adhesive composition of any one of claims 1 to 3.

## INTERNATIONAL SEARCH REPORT

| International application No. |
|---|
| **PCT/JP2022/012056** |

**A. CLASSIFICATION OF SUBJECT MATTER**

*B32B 27/30*(2006.01)i; *B32B 27/32*(2006.01)i; *C09J 123/26*(2006.01)i; *C09J 167/02*(2006.01)i; *B32B 7/12*(2006.01)i
FI: C09J167/02; B32B7/12; B32B27/30 101; B32B27/32 C; C09J123/26

According to International Patent Classification (IPC) or to both national classification and IPC

**B. FIELDS SEARCHED**

Minimum documentation searched (classification system followed by classification symbols)

B32B27/30; B32B27/32; C09J123/26; C09J167/02; B32B7/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-193699 A (TOYOBO CO., LTD.) 26 October 2017 (2017-10-26) comparative example 5, paragraphs [0067], [0070], [0074] | 1-3 |
| A | | 4 |
| A | JP 2012-233119 A (KURABO IND. LTD.) 29 November 2012 (2012-11-29) entire text | 1-4 |
| A | JP 2018-126947 A (UNITIKA LTD.) 16 August 2018 (2018-08-16) entire text | 1-4 |
| A | JP 5-86239 A (MITSUBISHI KASEI CORP.) 06 April 1993 (1993-04-06) entire text | 1-4 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2022/012056**

| Patent document cited in search report | | | Publication date (day/month/year) | Patent family member(s) | | | Publication date (day/month/year) |
|---|---|---|---|---|---|---|---|
| JP | 2017-193699 | A | 26 October 2017 | (Family: none) | | | |
| JP | 2012-233119 | A | 29 November 2012 | (Family: none) | | | |
| JP | 2018-126947 | A | 16 August 2018 | (Family: none) | | | |
| JP | 5-86239 | A | 06 April 1993 | US<br>entire text<br>EP<br>DE<br>AU<br>NZ<br>AU | 5328767<br><br>509458<br>69212200<br>1475092<br>242261<br>644730 | A<br><br>A1<br>T2<br>A<br>A<br>B2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04323292 A

- JP H0586239 A